# EUROPÄISCHE PATENTSCHRIFT

(11) **EP 0 617 502 B1**
(45) Veröffentlichungstag und Bekanntmachung des Hinweises auf die Patenterteilung: **14.02.1996**
(21) Anmeldenummer: 94104367.1
(22) Anmeldetag: 19.03.1994
(51) Int. Cl.: H02M 5/257, H02M 5/293

(54) **Verfahren und Schaltungsanordnung zur Erzeugung einer Grundlast in einem Wechselstromkreis**
Method and circuit arrangement for producing a basis load in an AC circuit
Procédé et circuit pour obtenir une charge de base dans un circuit de courant alternatif

(30) Priorität: 26.03.1993 DE 4309835
(43) Veröffentlichungstag der Anmeldung: 28.09.1994
(73) Patentinhaber: ABB PATENT GmbH, D-68309 Mannheim (DE)
(72) Erfinder: Goldyn, Dirk, D-58454 Witten (DE)
(74) Vertreter: Rupprecht, Klaus, Dipl.-Ing.

(56) Entgegenhaltungen:
- EP-A- 0 427 709
- GB-A- 2 176 665

## Beschreibung

Die Erfindung betrifft ein Verfahren nach dem Oberbegriff des Anspruchs 1 und eine Schaltungsanordnung nach dem Oberbegriff des Anspruchs 6.

Einige elektronische Steuergeräte für Wechselspannung, wie z.B. bestimmte Dimmer und Drehzahlsteller, benötigen als zweipolige Geräte, mangels separater Stromversorgung, zu ihrem funktionssicheren Betrieb eine Grundlast. Diese gewährleistet, daß ein Laststrom durch das Steuergerät fließt, der in ihm einen Spannungsabfall erzeugt, der seinerseits bestimmte Grundfunktionen, wie eine interne Spannungsversorgung oder Zünd- und Halteströme für Triacs, ermöglicht. Eine derartige Grundlast wird auch dann benötigt, wenn zwar eine Last vorhanden ist, jedoch der durch sie, z.B. eine schwache Lampe, verursachte Laststrom unterhalb dem für bestimmte Dimmer vorgeschriebenen Mindestlaststrom bleibt.

Es ist bekannt als Grundlast einen Leistungswiderstand in den Wechselstromkreis des Steuergerätes einzusetzen. Dieser stellt aber nicht nur einen weitgehend nutzlosen und damit unerwünschten Stromverbraucher dar, sondern führt auch durch seine Verlustleistung und den daraus resultiernden hohen Temperaturanstieg zu installationstechnischen Problemen.

Aufgabe der Erfindung ist es deshalb, ein Verfahren nach dem Oberbegriff des Anspruchs 1 und eine Schaltungsanordnung nach dem Oberbegriff des Anspruchs 6 so zu verbessern, daß die durch die Grundlast verursachte Verlustleistung stark verringert und entspechende Temperaturerhöhungen vermieden werden.

Diese Aufgabe wird durch die in den Ansprüchen 1 und 6 gekennzeichneten Merkmale gelöst. Zweckmäßige Ausgestaltungen und Weiterbildungen des Erfindungsgegenstandes sind in den Unteransprüchen genannt.

Da erfindungsgemäß als Grundlast eine aktive Grundlast dient, die so gesteuert wird, daß der über den Grundlastwiderstand geleitete Mindestlaststrom nur in der Sperrphase des Steuergerätes fließt, gelingt es eine Mindestlast ohne größere Verlustleistung zu erzeugen, so daß auch der Temperaturanstieg an dem in den Wechselstromkreis eingeschalteten Grundlastwiderstand minimal ist.

Eine zweckmäßige Ausgestaltung des Erfindungsgegenstandes sieht vor, daß bei einem mit Phasenanschnitt arbeitenden Steuergerät der bei Beginn der Durchlaßphase des Steuergerätes auftretende Anstieg des Laststromes erfaßt und nach entsprechender Auswertung zum Abschalten des über den Grundlastwiderstand geleiteten Mindestlaststromes genutzt wird. Andererseits wird auch der Zeitpunkt des Spannungsnulldurchgangs im Wechselstromkreis erfaßt und nach entsprechender Auswertung zum Einschalten des Mindestlaststromes genutzt. Auf diese Weise wird sichergestellt, daß die Grundlast nur in dem kurzen Augenblick des Stromanstiegs eine nennenswerte Verlustleistung im Lastkreis des Steuergerätes bewirkt. Vor dem Durchschalten des Seuergerätes fließt durch die aktive Grundlast lediglich der geringe Versorgungsstrom des Steuergerätes und nach dem Durchschalten des Steuergerätes bis zum nächsten Nulldurchgang der Wechselspannung wird die aktive Grundlast hochohmig und damit jeglicher Laststrom gesperrt.

Sofern die elektronische Grundlast in Verbindung mit einem Steuergerät zum Einsatz kommt, das nicht nach dem Prinzip des Phasenanschnitts arbeitet, muß eine entsprechende Anpassung an die geänderten Ansteuerverhältnisse erfolgen.

Zur Durchführung des Verfahrens ist erfindungsgemäß eine Schaltungsanordnung vorgesehen, die so aufgebaut ist, daß als Grundlast eine aktive Grundlast dient, die ein erstes Schaltglied sowie Funktionseinheiten für eine Stromerfassung, eine Synchronisation und eine erste interne Stromversorgung umfaßt. Weiterhin ist dafür gesorgt, daß während der Sperrphase des Steuergerätes ein zum ersten Schaltglied gehöriger niederohmiger Grundlastwiderstand in den Wechselstromkreis geschaltet wird. Dieser Grundlastwiderstand muß wegen der relativ geringen an ihm entstehenden Verlustleistung kein Leistungswiderstand sein.

In einer weiteren Ausbildung des Erfindungsgegenstandes ist vorgesehen, daß die erste interne Spannungsversorgung der elektronischen Grundlast mit Hilfe einer am Phasenleiter einer Wechselspannungsquelle liegenden Netzdiode erfolgt. Diese erzeugt über einen Netzwiderstand und eine mit Nullpotential verbundene Zenerdiode eine stabilisierte und durch einen Ladekondensator gepufferte Gleichspannung.

Weiterhin ist vorgesehen, daß die Synchronisation und die Ansteuerlogik zur Erfassung der Spannungsnulldurchgänge der Wechselspanungsquelle mit Hilfe von zwei zwischen dem Phasenleiter und Bezugspotential liegenden Spannungsteilerwiderständen realisiert ist. Ein Abgriff der Spannungsteilerwiderstände ist über einen Inverter mit den Eingängen zweier Monoflops verbunden, deren Ausgänge über je eine Diode zusammengeführt sind und über einen zweiten Inverter und einen Koppelwiderstand am Steuereingang des ersten Schaltgliedes liegen.

Wichtig ist, daß die aktive Grundlast in beiden Halbwellen der Wechselspannungsquelle wirksam ist. Das wird dadurch erreicht, daß das erste Schaltglied zwei mit ihren Schaltstrecken in Reihe liegende Schalttransistoren besitzt. Jeder Schaltstrecke ist eine Inversdiode parallelgeschaltet und die beiden Schalttransistoren sind so gepolt und gesteuert, daß je nach Polarität der Wechselspannungshalbwelle entweder ein Strom über die Schaltstrecke des ersten Schalttransistors und die zweite Inversdiode oder die Schaltstrecke des zweiten Schalttransistors und die erste Inversdiode fließt. Der Sourceanschluß des ersten Schalttransistors liegt über einen ersten Meßwiderstand und der des zweiten Schalttransistors liegt über einen zweiten Meßwiderstand auf Bezugspotential. Weiterhin liegt der Drainanschluß des ersten Schalttransistors über einen ersten Vorwiderstand und das Steuergerät am Phasenleiter während der zweite Schalttransistor über einen zweiten Vorwiderstand am Nulleiter liegt. Die Gateanschlüsse der beiden Schalttransistoren sind über einen Gatewiderstand mit dem Steuereingang des ersten Schaltgliedes verbunden.

Damit der Stromanstieg beim Umschalten des Steuergerätes von der Sperrphase in die Durchlaßphase erfaßt werden kann, liegen die Sourceanschlüsse der beiden Schalttransistoren des ersten Schaltgliedes über je einen Basiswiderstand an der Basis je eines Transistors. Deren Kollektoren sind wiederum über eine gemeinsame Leitung mit Reseteingängen der Monoflops verbunden und deren Emitter sind auf Bezugspotential gelegt. Ein steigender Laststrom führt zu einem Spannugsabfall an den Meßwiderständen und bewirkt damit ein Zurücksetzen der beiden Monoflops.

Eine besondes vorteilhafte Weiterbildung des Erfindungsgegenstandes sieht vor, daß am Ausgang des zweiten Inverters der aktiven Grundlast ein Auskoppelsignal entnehmbar ist, das über einen Koppler zu einem zur Steuerung eines elektronischen Vorschaltgerätes dienenden Konverter gelangt, der Funktionseinheiten besitzt, die eine Puls-Pausen-Signalgenerierung, eine Wandlung einen Schaltbefehl, eine Einschaltstrombegrenzung, ein zweites Schaltglied und eine zweite interne Spannungsversorgung ermöglichen.

Als Koppler am Eingang der Puls-Pausen-Generierung dient zweckmäßigerweise ein Optokoppler, dessen Ausgangssignal über einen dritten Inverter negiert wird und zur Wandlung wie auch zur Erzeugung des Schaltbefehls dient.

Die zur Wandlung dienende Funktionseinheit besitzt einen mit Widerständen und Kondensatoren als Integrator aufgebauten, einen Transistor steuernden Operationsverstärker. Dabei dient der Transistor als gesteuerter, veränderbarer Widerstand und überbrückt mit seiner Kollektor/Emitter-Strecke den Steuereingang eines hier anzuschließenden elektronischen Vorschaltgerätes.

Um auch den Schalteingang eines elektronischen Vorschaltgerätes betätigen zu können, ist das Ausgangssignal des dritten Inverters zur Signalverlängerung einem dritten Monoflop zugeführt und gelangt von diesem über einen Widerstand zur Basis eines Transistors. Dessen Emitter ist mit Nulleiterpotential verbunden und in seiner Kollektorleitung liegt eine Relaiswicklung, die über einen Schaltkontakt des Relais einen Schaltanschluß des elektronischen Vorschaltgerätes mit dem Phasenleiter der Wechselspannungsquelle verbindet.

Um die mit Hilfe des Optokopplers erreichte Potentialtrennung zu gewährleisten, muß der Konverter mit einer eigenen Spannungsversorgung ausgestattet werden. Bei dieser Schaltung dient der Nulleiter als Bezugspotential, während die aktive Grundlast ein eigenes internes Bezugspotetial besitzt. Somit erfolgt die zweite Spannungsversorgung mit Hilfe einer zwischen Phasenleiter und Nulleiter eines Wechselspannungsquelle liegenden Reihenschaltung, zu der eine zweite Netzdiode, eine Drossel, ein Kondensator und ein zweiter Netzwiderstand (RN1) gehören. Von der zweiten auf Nulleiterpotential liegenden Netzdiode führt eine dritte Netzdiode zu einem ersten positiven, durch Kondensatoren gepufferten Versorgungsausgang und über in Reihe geschaltete, auf Nulleiterpotential liegende Zenerdioden zu einer zwischen diesen liegenden stabilisierten zweiten Versorgungsausgang.

Ausführungsbeispiele der Erfindung sind in den Zeichnungen dargestellt und werden im folgenden näher beschrieben. Es zeigen:
- Fig. 1: Ein Blockschaltbild einer aktiven Grundlast an einem unbelasteten Steuergerät,
- Fig. 2: ein Blockschaltbild einer aktiven Grundlast an einem belasteten Steuergerät, wobei als Steuergerät ein Dimmer dient,
- Fig. 3: ein Blockschaltbild einer aktiven Grundlast in Kombination mit einem Konverter für ein Vorschaltgerät.
- Fig. 4: ein Prinzipschaltbild einer aktiven Grundlast.
- Fig. 5: ein Prinzipschaltbild einer aktiven Grundlast in Kombination mit einem Konverter für ein Vorschaltgerät.

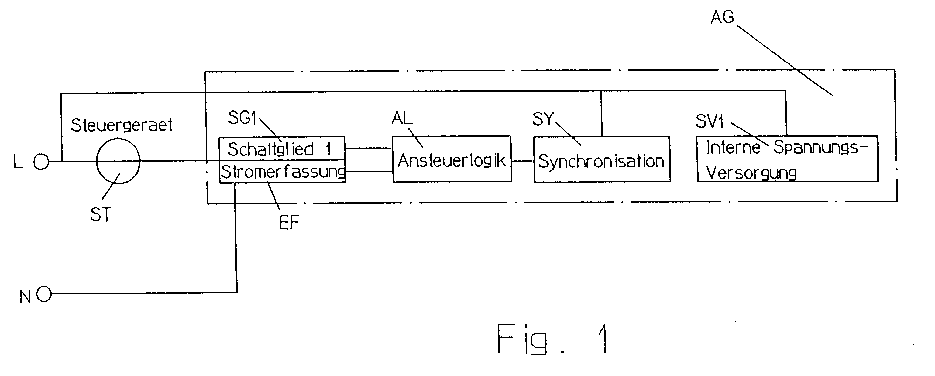

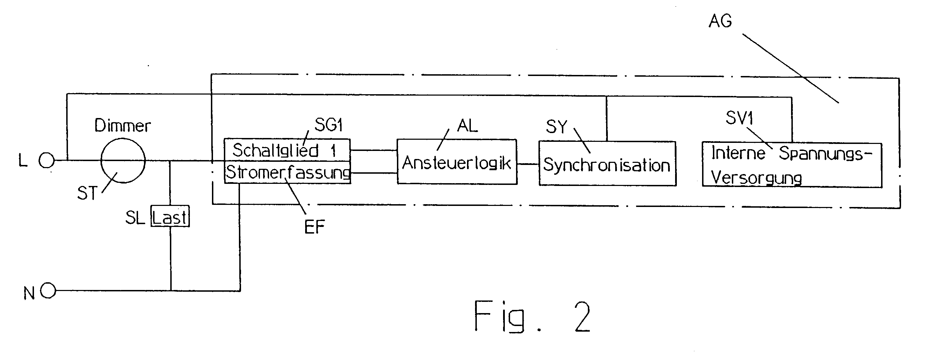

Wie die Figuren 1 und 2 erkennen lassen, gehören zur aktiven Grundlast AG ein Schaltglied SG1 mit einer Stromerfassung EF, einer Ansteuerlogik AL, einer Synchronisation SY und einer ersten internen Spannungsversorgung SV1. In beiden Darstellungen dient die aktive Grundlast AG zur Erzeugung eines für den Betrieb eines Steuergerätes ST erforderlichen Mindestlaststroms. Während jedoch beim Steuergerät ST nach Fig. 1 der Mindestlaststrom ausschließlich durch die aktive Grundlast AG erzeugt wird, ist das Steuergerät ST nach Fig. 2 bereits mit einer Steuerlast SL versehen, deren Laststrom aber unter dem erfoderlichen Mindestlaststrom bleibt, so daß hier die aktive Grundlast AG als Zusatzlast benötigt wird.

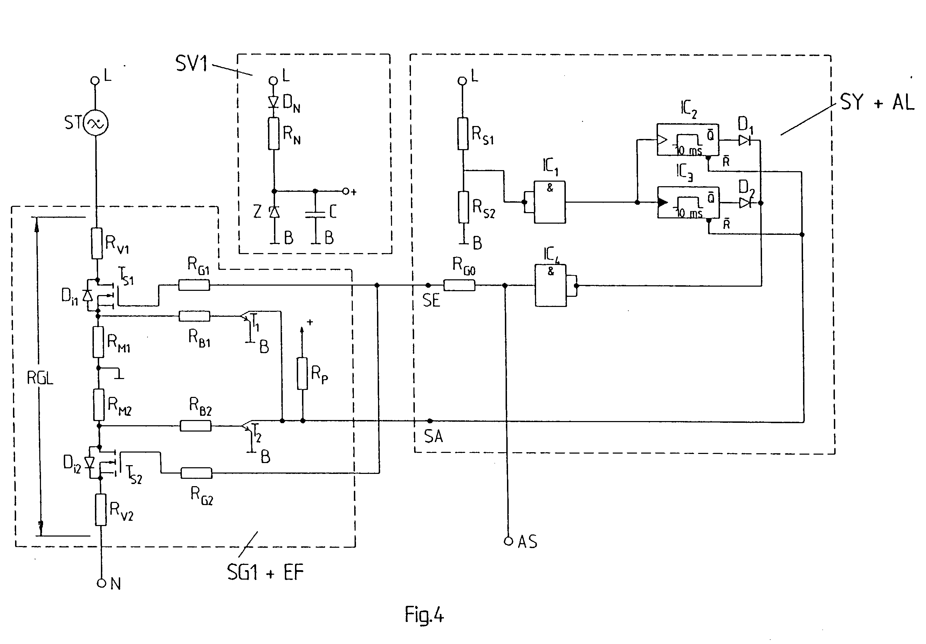

Fig. 4 zeigt den prinzipiellen Aufbau einer Schaltungsanordnung mit der sich die aktive Grundlast AG realisieren läßt. Gebildet wird die Grundlast durch einen Grundlastwiderstand RGL, der sich aus einer Reihenschaltung zusammensetzt, die über das Steuergerät ST mit einer Wechselspannungsquelle LN verbunden ist. Auf der Seite des Phasenleiters L beginnt die Reihenschaltung mit einem ersten Vorwiderstand RV1, dem die Schaltstrecke eines ersten Schalttransistors TS1, im vorliegenden Fall die Drain/Source-Verbindung eines Feldeffekttransistors, folgt, die über einen ersten Meßwiderstand RM1 auf Bezugspotential B liegt. Eine gleiche Anordnung beginnt auf der Seite des Nulleiters N mit einem zweiten Vorwiderstand RV2, dem die Schaltstrecke eines zweiten Schalttransistors TS2 folgt, die über einen zweiten Meßwiderstand RM2 auf Bezugspotential B geführt ist. Da die Schaltstrecken der beiden Schalttransistoren TS1,TS2 jeweils mit einer Inversdiode DI1,DI2 überbrückt sind, kann entsprechend der Polarität der Wechselspannungshalbwellen bei durchgeschalteten
Schalttransistoren TS1,TS2 die eine Halbwelle über den ersten Transistor TS1 und die zweite, den zweiten Transistors TS2 überbrückende Inversdiode DI2 zum Nulleiter N gelangen, während die andere Halbwelle über den zweiten Schalttransistor TS2 und die erste, den ersten Schalttransistor TS1 überbrückende Inversdiode DI1 sowie das Steuergerät ST zum Phasenleiter L gelangt.

Die Steuerung des ersten Schaltgliedes SG1 erfolgt vom Steuereingang SE aus, der über einen ersten Gatewiderstand RG1 mit der Steuerelektrode des ersten Schalttransistors TS1, im vorliegenden Fall mit dem Gate des Feldeffekttransistors, und über einen zweiten Gatewiderstand RG2 mit der Steuerelektrode des zweiten Schalttransistors TS2 verbunden ist.

Weiterhin ist im ersten Schaltglied SG1 eine Stromerfassung vorgesehen, die einen in der Durchlaßphase des Steuergerätes ST hervorgerufenen Stromanstieg durch den an den Meßwiderständen RM1,RM2 bewirkten Spannungsabfall erfaßt und als Signal jeweils über einen zugeordneten Basiswiderstand RB1,RB2 an die Basis je eines Transistors T1,T2 weitergibt. Die Emitter der beiden Transistoren T1,T2 liegen auf dem selben Bezugspotential B wie die beiden Meßwiderstände RM1,RM2 und die Kollektoren sind mit einander verbunden und liegen einerseits über einen Widerstand RP an einer Spannungsversorgung SV1 und andererseits an einem Steuerausgang SA.

Zur internen Spannungsversorgung SV1 dient eine am Phasenleiter L der Wechselspannungsquelle LN liegende Netzdiode DN, die über einen Netzwiderstand RN und eine mit Nullpotential verbundene Zenerdiode Z. An der letzteren entsteht eine stabilisierte und durch einen Ladekondensator C gepufferte Gleichspannung.

Der Steuereingang SE des Schaltgliedes SG1 ist mit der Synchronisation SY und der Ansteuerlogik AL verbunden. Diese sind zur Erfassung der Spannungsnulldurchgänge der Wechselspanungsquelle LN mit zwei zwischen dem Phasenleiter L und Bezugspotential B liegenden Spannungsteilerwiderständen RS1,RS2 versehen, deren Abgriff über einen Inverter IC1 mit den Eingängen zweier Monoflops IC2,IC3 verbunden ist. Deren Ausgänge sind über je eine Diode D1,D2 zusammengelegt und über einen zweiten Inverter IC4 und einen Koppelwiderstand RG0 zum Steuereingang SE des ersten Schaltgliedes SG1 geführt. Auf diese Weise können jeweils die Spannungsnulldurchgänge an der Wechselspannungsquelle erfaßt und die Schalttransistoren TS1,TS2 zu diesem Zeitpunkt durchgesteuert werden.

Ein Sperren der Schalttransistoren TS1,TS2 wird mit Hilfe des Steuerausgangs SA erreicht, der bei Stromanstieg im Grundlastwiderstand RGL ein High-Signal an Reseteingänge R des ersten und zweiten Monoflops IC2,IC3 gibt und diese dadurch in ihren Ausgangszustand zurückversetzt, in dem der Steuereingang mit einem Low-Signal beaufschlagt wird.

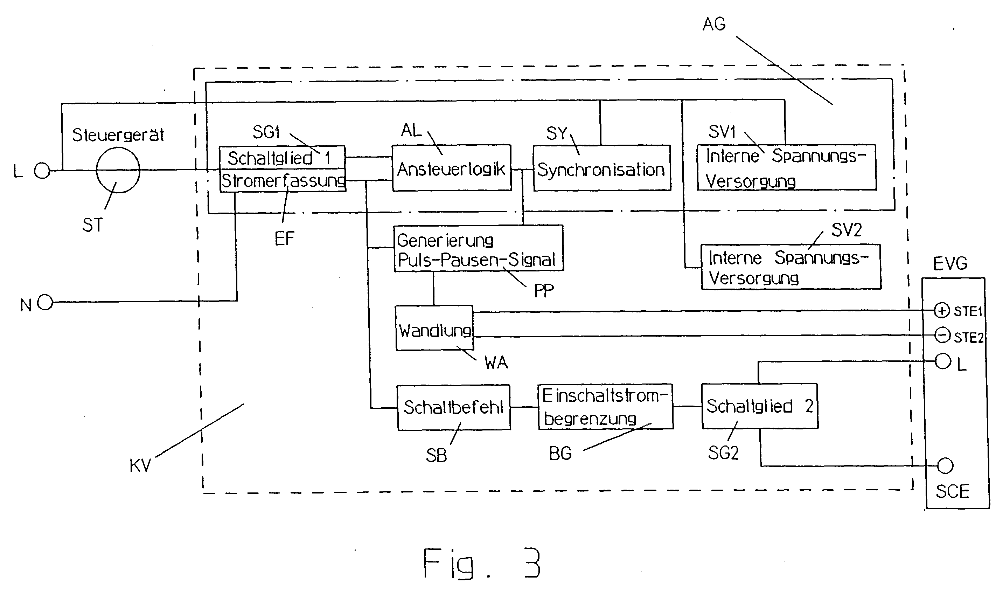

In Fig.3 erkennt man das Blockschaltbild eines Konverters KV, der mit der aktiven Grundlast AG zusammengefaßt ist und von ihr erzeugte Signale zur Ansteuerung eines elektonischen Vorschaltgerätes EVG weiterverarbeitet. Bekannte elektronische Vorschaltgeräte EVG besitzen einen Steuereingang STE1,STE2 und einen Schalteingang SCE. Der Steuereingang STE1,STE2 kann in Abhängigkeit von seiner Belastung im Bereich von 0-10V eingestellt werden. Zu seiner Belastung kann eine passive Last (Widerstand) oder aktive Last (Transistor) verwendet werden. Am Schalteingang wird dem elektronischen Vorschaltgerät EVG mittels eines zweiten Schaltgliedes SG2 vom Phasenleiter L eine Wechselspannung zugeführt.

Die Zeit zwischen dem Nulldurchgang der Netzwechselspannung und dem Anstieg des Laststromes durch das Steuergerät ST wird zur Erzeugung eines Puls-Pausen-Signals genutzt. Ein Auskoppelsignal AS kann aus der Ansteuerlogik AL der aktiven Grundlast AG am Ausgang des zweiten Inverters IC4 entnommen und einer Puls-Pausen-Signalgenerierung PP zugeführt werden. Durch eine nachgeschaltete Wandlung WA wird das Puls-Pausen-Signal in eine veränderliche Last umgewandelt, mit der die Steuereingänge STE1,STE2 des Konverters KV belastet werden können. Das Auskoppelsignal AS wird außerdem zu einem Schaltbefehl SB umgewandelt und über eine Strombegrenzung BG dem zweiten Schaltglied SG2 zugeführt, das den Schalteingang des elektronischen Vorschaltgerätes EVG mit dem Phasenleiter L der Wechselspannungsquelle LN verbindet.

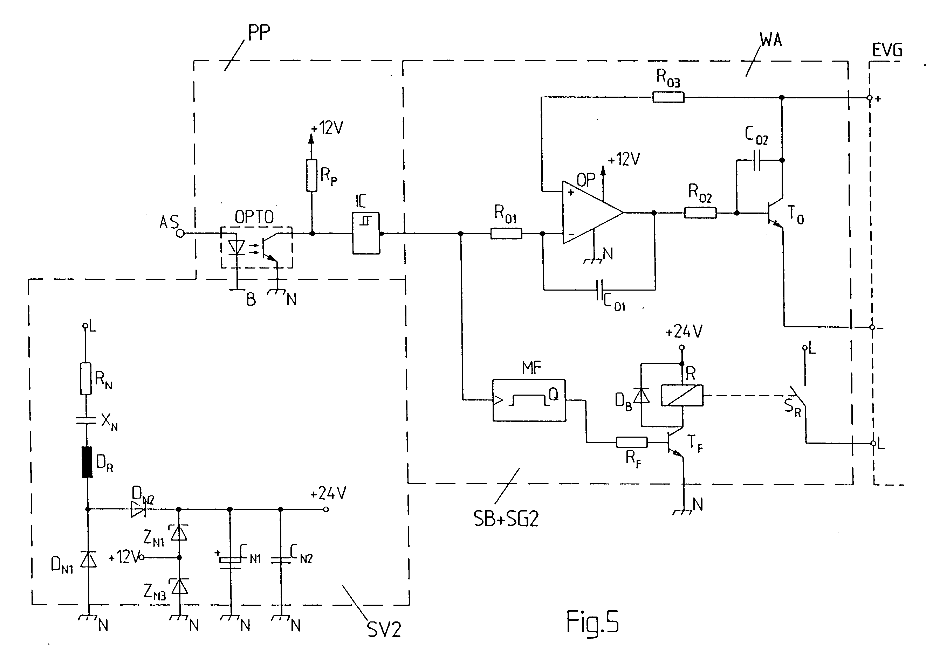

Wie Fig. 5 zeigt, dient zur potentialfreien Entnahme des Auskoppelsignals ein Optokoppler OPTO, dessen Engangssignal auf das gleiche Bezugspotential B wie die aktive Grundlast AG und dessen Ausgangssignal auf das Potential des Nulleiters N bezogen ist. Das Ausgangssignal des Optokopplers OPTO gelangt über einen dritten Inverter IC in negierter Form zu einer Funktionseinheit für die Wandlung WA und einer weiteren Funktionseinheit für den Schaltbefehl SB.

Die zur Wandlung dienende Funktionseinheit WA besitzt einen mit Widerständen RO1,RO2,RO3 und Kondensatoren CO1,CO2 als Integrator aufgebauten und einen Transistor TO steuernden Operationsverstärker OP. Dabei überbrückt der Transistor TO als gesteuerter, veränderbarer Widerstand mit seiner Kollektor/Emitter-Strecke den Steuereingang eines elektronischen Vorschaltgerätes EVG.

Das Ausgangssignal des dritten Inverters IC ist zur Signalverlängerung einem dritten Monoflop MF zugeführt und gelangt von diesem über einen Widerstand RF zur Basis eines Transistors TF, dessen Emitter mit Nulleiterpotential verbunden ist. In der Kollektorleitung liegt eine Relaiswicklung R, die über einen Schaltkontakt SR des Relais einen Schaltanschluß SCE des elektronischen Vorschaltgerätes EVG mit dem Phasenleiter L der Wechselspannungsquelle LN verbindet.

Die zweite interne Spannungsversorgung SV2 erfolgt mit Hilfe einer zwischen Phasenleiter L und Nulleiter N einer Wechselspannungsquelle LN liegenden Reihenschaltung, zu der eine zweite Netzdiode DN1, eine Drossel DR, ein Kondensator XN und ein zweiter Netzwiderstand RN1 gehören. Von der zweiten auf Nulleiterpotential N liegenden Netzdiode DN1 führt eine dritte Netzdiode DN2 zu einem ersten positiven, durch Kondensatoren CN1,CN2 gepufferten Versorgungsausgang von +24V und über in Reihe geschaltete, auf Nulleiterpotential liegende Zenerdioden ZN1,ZN2 zu einer zwischen diesen liegenden stabilisierten zweiten Versorgungsausgang von +12V.

## Patentansprüche

1. Verfahren zur Erzeugung einer Grundlast in einem Wechselstromkreis, in dem ein elektronisches Steuergerät liegt, zu dessen funktionssicherem Betrieb ein Grundlastwiderstand einen Mindestlaststrom über das Steuergerät ermöglicht, dadurch gekennzeichnet, daß als Grundlast eine aktive Grundlast (AG) dient, die so gesteuert wird, daß der über den Grundlastwiderstand (RGL) geleitete Mindestlaststrom nur in der Sperrphase des Steuergerätes (ST) fließt und außerhalb der Sperrphase, von der Beginn und Ende erfaßt werden, die Grundlast hochohmig wird.

2. Verfahren nach Anspruch 1, dadurch gekennzeichnet, daß bei einem mit Phasenanschnitt arbeitenden Steuergerät (ST) der bei Beginn der Durchlaßphase des Steuergerätes (ST) auftretende Anstieg des Laststromes erfaßt und nach entsprechender Auswertung zum Abschalten des über den Grundlastwiderstand (RGL) geleiteten Mindestlaststromes genutzt wird.

3. Verfahren nach einem der vorhergehenden Ansprüche, dadurch gekennzeichnet, daß bei einem mit Phasenanschnitt arbeitenden Steuergerät (ST) der Zeitpunkt des Spannungsnulldurchgangs im Wechselstromkreis erfaßt und nach entsprechender Auswertung zum Einschalten des Mindestlaststromes genutzt wird.

4. Verfahren nach Anspruch 1, dadurch gekennzeichnet, daß bei einem mit Phasenabschnitt arbeitenden Steuergerät (ST) der am Ende der Durchlaßphase des Steuergerätes (ST) auftretende Abfall des Laststromes erfaßt und nach entsprechender Auswertung zum Einschalten des Mindestlaststromes genutzt wird.

5. Verfahren nach Anspruch 4, dadurch gekennzeichnet, daß bei einem mit Phasenabschnitt arbeitenden Steuergerät (ST) der Zeitpunkt des Spannungsnulldurchgangs im Wechselstromkreis erfaßt und nach entsprechender Auswertung zum Abschalten des Mindestlaststromes genutzt wird.

6. Schaltungsanordnung zur Durchführung des Verfahrens nach einem der Ansprüche 1 bis 5, mit einem elektronischen Steuergerät (ST), das in einem Wechselstromkreis liegt und mit einer Grundlast versehen ist, die einen für den funktionssicheren Betrieb des Steuergerätes (ST) erforderlichen Mindestlaststrom ermöglicht, dadurch gekennzeichnet, daß als Grundlast eine Beginn und Ende der Sperrphase des Steuergerätes (ST) erfassende aktive Grundlast (AG) dient, die ein erstes Schaltglied (SG1) sowie Funktionseinheiten für eine Stromerfassung (EF), eine Synchronisation (SY) und eine erste interne Spannungsversorgung (SV1) umfaßt, und die einen zum ersten Schaltglied (SG1) gehörigen niederohmigen Grundlastwiderstand (RGL) während der Sperrphase des Steuergerätes (ST) in den Wechselstromkreis schaltet und außerhalb der Sperrphase hochohmig ist.

7. Schaltungsanordnung nach Amspruch 6, dadurch gekennzeichnet, daß die erste interne Spannungsversorgung (SV1) mit Hilfe einer am Phasenleiter (L) einer Wechselspannungsquelle (LN) liegenden Netzdiode (DN) erfolgt, die über einen Netzwiderstand (RN) und eine mit Nullpotential verbundene Zenerdiode (Z), an der letzteren eine stabilisierte und durch einen Ladekondensator (C) gepufferte Gleichspannung erzeugt.

8. Schaltungsanordnung nach einem der Amsprüche 6 oder 7, dadurch gekennzeichnet, daß die Synchronisation (SY) und die Ansteuerlogik (AL) zur Erfassung der Spannungsnulldurchgänge der Wechselspanungsquelle (LN) mit Hilfe von zwei zwischen dem Phasenleiter (L) und Bezugspotential (B) liegenden Spannungsteilerwiderständen (RS1,RS2) realisiert ist, deren Abgriff über einen Inverter (IC1) mit den Eingängen zweier Monoflops (IC2,IC3) verbunden ist, deren Ausgänge über je eine Diode (D1,D2) zusammengeführt und über einen zweiten Inverter (IC4) und einen Koppelwiderstand (RG0) am Steuereingang (SE) des ersten Schaltgliedes (SG1) liegen.

9. Schaltungsanordnung nach einem der Amsprüche 6 bis 8, dadurch gekennzeichnet, daß das erste Schaltglied (SG1) zwei mit ihren Schaltstrecken in Reihe liegende Schalttransistoren (TS1,TS2) besitzt, und jeder Schaltstrecke eine Inversdiode (DI1,DI2) parallelgeschaltet ist und daß die beiden Schalttransistoren (TS1,TS2) so gepolt und gesteuert sind, daß je nach Polarität der Wechselspannungshalbwelle entweder ein Strom über die Schaltstrecke des ersten Schalttransistors (TS1) und die zweite Inversdiode (DI2) oder die Schaltstrecke des zweiten Schalttransistors (TS2) und die erste Inversdiode (DI1) fließt, und daß jeweils mit dem Sourceanschluß der erste Schalttransistor (TS1) über einen ersten Meßwiderstand (RM1) und der zweite Schalttransistor (TS2) über einen zweiten Meßwiderstand (RM2) auf Bezugspotential (B) liegen, und jeweils mit dem Drainanschluß der erste Schalttransistor (TS1) über einen ersten Vorwiderstand (RV1) und das Steuergerät (ST) am Phasenleiter (L) und der zweite Schalttransistor (TS2) über einen zweiten Vorwiderstand (RV2) am Nulleiter (N) liegen und daß die Gateanschlüsse der beiden Schalttransistoren (TS1,TS2) jeweils über einen Gatewiderstand (RG1,RG2) mit dem Steuereingang (SE) des ersten Schaltgliedes (SG1) verbunden sind.

10. Schaltungsanordnung nach Anspruch 9, dadurch gekennzeichnet, daß die Sourceanschlüsse der beiden Schalttransistoren (TS1,TS2) des ersten Schaltgliedes (SG1) über je einen Basiswiderstand (RB1,RB2) an der Basis je eines Transistors (T1,T2) liegen, deren Kollektoren über eine gemeinsame Leitung mit Reseteingängen (R) der Monoflops (IC2,IC3) verbunden sind und deren Emitter auf Bezugspotential (B) liegt.

11. Schaltungsanordnung nach einem der Amsprüche 6 bis 10, dadurch gekennzeichnet, daß am Ausgang des zweiten Inverters (IC4) der aktiven Grundlast (AG) ein Auskoppelsignal (AS) entnehmbar ist, das über einen Koppler (OPTO) zu einem zur Steuerung eines elektronischen Vorschaltgerätes (EVG) dienenden Konverter (KV) gelangt, der Funktionseinheiten besitzt, die eine Puls-Pausen-Signal-generierung (PP), eine Wandlung (WA) einen Schaltbefehl (SB), eine Einschaltstrombegrenzung (BG), ein zweites Schaltglied (SG2) und eine zweite interne Spannungsversorgung (SV2) umfassen.

12. Schaltungsanordnung nach Anspruch 11, dadurch gekennzeichnet, daß als Koppler (OPTO) am Eingang der Puls-Pausen-Generierung (PP) ein Optokoppler dient, dessen Ausgangssignal über einen dritten Inverter (IC) in negierter Form zur Wandlung (WA) und zur Funktionseinheit für den Schaltbefehl (SB) gelangt.

13. Schaltungsanordnung nach Anspruch 12, dadurch gekennzeichnet, daß die zur Wandlung dienende Funktionseinheit (WA) einen mit Widerständen (RO1,RO2,RO3) und Kondensatoren (CO1,CO2) als Integrator aufgebauten und einen Transistor (TO) steuernden Operationsverstärker (OP) besitzt, wobei der Transistor (TO) als gesteuerter, veränderbarer Widerstand dient und mit seiner Kollektor/Emitter-Strecke den Steuereingang eines elektronischen Vorschaltgerätes (EVG) überbrückt.

14. Schaltungsanordnung nach Anspruch 12, dadurch gekennzeichnet, daß das Ausgangssignal des dritten Inverters (IC) zur Signalverlängerung einem dritten Monoflop (MF) zugeführt ist und von diesem über einen Widerstand (RF) zur Basis eines Transistors (TF) gelangt, dessen Emitter mit Nulleiterpotential (N) verbunden ist und in dessen Kollektorleitung eine Relaiswicklung (R) liegt, die über einen Schaltkontakt (SR) des Relais einen Schaltanschluß (SCE) des elektronischen Vorschaltgerätes (EVG) mit dem Phasenleiter (L) der Wechselspannungsquelle (LN) verbindet.

15. Schaltungsanordnung nach einem der Amsprüche 11 bis 14, dadurch gekennzeichnet, daß die zweite interne Spannungsversorgung (SV2) mit Hilfe einer zwischen Phasenleiter (L) und Nulleiter (N) eines Wechselspannungsquelle (LN) liegenden Reihenschaltung erfolgt, zu der eine zweite Netzdiode (DN1), eine Drossel (DR), ein Kondensator (XN) und ein zweiter Netzwiderstand (RN1) gehören und von der zweiten auf Nulleiterpotential liegenden Netzdiode (DN1) eine dritte Netzdiode (DN2) zu einem ersten positiven, durch Kondensatoren (CN1,CN2) gepufferten Versorgungsausgang (+24V) führt und über in Reihe geschaltete, auf Nulleiterpotential liegende Zenerdioden (ZN1,ZN2) zu einem zwischen diesen liegenden stabilisierten zweiten Versorgungsausgang (+12V) führt.

## Claims

1. Method for producing a basic load in an AC circuit in which an electronic controller is located for whose functionally reliable operation a basic load resistor makes possible a minimum load current via the controller, characterized in that an active basic load (AG) is used as the basic load and is controlled such that the minimum load current which is passed via the basic load resistor (RGL) flows only in the switched-off phase of the controller (ST) and the basic load becomes a high resistance other than in the switched-off phase, of which the start and end are detected.

2. Method according to Claim 1, characterized in that, in the case of a controller (ST) which operates using phase gating, the rise in the load current which occurs at the start of the switched-on phase of the controller (ST) is detected and, after appropriate evaluation, is used to turn off the minimum load current which is passed via the basic load resistor (RGL).

3. Method according to one of the preceding claims, characterized in that, in the case of a controller (ST) which operates using phase gating, the point in time of the voltage zero crossing in the AC circuit is detected and, after appropriate evaluation, is used to switch on the minimum load current.

4. Method according to Claim 1, characterized in that, in the case of a controller (ST) which operates using phase gating, the drop in the load current which occurs at the end of the switched-on phase of the controller (ST) is detected and, after appropriate evaluation, is used to switch on the minimum load current.

5. Method according to Claim 4, characterized in that, in the case of a controller (ST) which operates using phase gating, the point in time of the voltage zero crossing in the AC circuit is detected and, after appropriate evaluation, is used to turn off the minimum load current.

6. Circuit arrangement for carrying out the method according to one of Claims 1 to 5, having an electronic controller (ST) which is located in an AC circuit and is provided with a basic load which makes possible a minimum load current which is required for functionally reliable operation of the controller (ST), characterized in that an active basic load (AG) is used as the basic load, which active basic load (AG) detects the start and end of the switched-off phase of the controller (ST), comprises a first switching element (SG1) as well as functional units for current detection (EF), synchronization (SY) and a first internal voltage supply (SV1), connects a low-resistance basic load resistor (RGL), which belongs to the first switching element (SG1), into the AC circuit during the switched-off phase of the controller (ST), and has a high resistance other than in the switched-off phase.

7. Circuit arrangement according to Claim 6, characterized in that the first internal voltage supply (SV1) is produced with the aid of a mains diode (DN), which is connected to the live conductor (L) of an AC voltage source (LN) and, via a mains resistor (RN) and a zener diode (Z) which is connected to neutral potential, produces on said zener diode (Z) a stabilized DC voltage which is buffered by a charge capacitor (C).

8. Circuit arrangement according to one of Claims 6 or 7, characterized in that the synchronization (SY) and the drive logic (AL) for detecting the voltage zero crossings of the AC voltage source (LN) are implemented with the aid of two voltage divider resistors (RS1, RS2), which are connected between the live conductor (L) and the reference-earth potential (B) and whose pick-off is connected via an invertor (IC1) to the inputs of two monostable multivibrators (IC2, IC3) whose outputs are joined together via in each case one diode (D1, D2) and are connected via a second invertor (IC4) and a coupling resistor (RGO) to the control input (SE) of the first switching element (SG1).

9. Circuit arrangement according to one of Claims 6 to 8, characterized in that the first switching element (SG1) has two switching transistors (TS1, TS2) whose switching paths are connected in series, and an inverse diode (DI1, DI2) is connected in parallel with each switching path, and in that the two switching transistors (TS1, TS2) are polarized and controlled such that a current flows either via the switching path of the first switching transistor (TS1) and the second inverse diode (DI2), or via the switching path of the second switching transistor (TS2) and the first inverse diode (DI1), depending on the polarity of the AC voltage half-cycle, and in that the source connection of the first switching transistor (TS1) is connected via a first measuring resistor (RM1) to reference-earth potential (B), and the source connection of the second switching transistor (TS2) is connected via a second measuring resistor (RM2) to reference-earth potential (B), the drain connection of the first switching transistor (TS1) is connected via a first bias resistor (RV1) and the controller (ST) to the live conductor (L), and the drain connection of the second switching transistor (TS2) is connected via a second bias resistor (RV2) to the neutral conductor (N), and in that the gate connections of the two switching transistors (TS1, TS2) are each connected via a gate resistor (RG1, RG2) to the control input (SE) of the first switching element (SG1).

10. Circuit arrangement according to Claim 9, characterized in that the source connections of the two switching transistors (TS1, TS2) of the first switching element (SG1) are connected via in each case one base resistor (RB1, RB2) to the base of in each case one transistor (T1, T2), the collectors of which transistors (T1, T2) are connected via a common line to reset inputs (R) of the monostable multivibrators (IC2, IC3), and the emitters of which transistors (T1, T2) are connected to reference-earth potential (B).

11. Circuit arrangement according to one of Claims 6 to 10, characterized in that an output signal (AS) can be picked off at the output of the second invertor (IC4) of the active basic load (AG), which output signal (As) passes via a coupler (OPTO) to a converter (KV) which is used for controlling an electronic input apparatus (EVG) and has functional units which comprise a pulse/pause signal generator (PP), a converter (WA), a switching command (SB), an inrush current limiter (EG), a second switching element (SG2) and a second internal voltage supply (SV2) .

12. Circuit arrangement according to Claim 11, characterized in that an optocoupler is used as the coupler (OPTO) at the input of the pulse/pause generator (PP), the output signal of which optocoupler passes via a third inverter (IC), in negated form, to the converter (WA) and to the functional unit for the switching command (SB).

13. Circuit arrangement according to Claim 12, characterized in that the functional unit (WA) which is used for conversion has an operational amplifier (OP) which is designed as an integrator with resistors (R01, R02, R03) and capacitors (C01, C02) and controls a transistor (T0), the transistor (T0) being used as a controlled, variable resistor and its collector/emitter path bridging the control input of an electronic input apparatus (EVG).

14. Circuit arrangement according to Claim 12, characterized in that the output signal of the third inverter (IC) is supplied, for signal lengthening, to a third monostable multivibrator (MF) and passes therefrom via a resistor (RF) to the base of a transistor (TF) whose emitter is connected to the neutral conductor potential (N) and in whose collector line a relay winding (R) is located which, via a switching contact (SR) of the relay, connects a switching connection (SCE) of the electronic input apparatus (EVG) to the live conductor (L) of the AC voltage source (LN).

15. Circuit arrangement according to one of Claims 11 to 14, characterized in that the second internal voltage supply (SV2) is produced with the aid of a series circuit which is connected between the live conductor (L) and the neutral conductor (N) of an AC voltage source (LN) and to which series circuit a second mains diode (DN1), an inductor (DR), a capacitor (XN) and a second mains resistor (RN1) belong, and a third mains diode (DN2) leads from the second mains diode (DN1), which is at the neutral conductor potential, to a first positive supply output (+24V), which is buffered by capacitors (CN1, CN2), and leads via series-connected zener diodes (ZN1, ZN2), which are at the neutral conductor potential, to a stabilized, second voltage output (+12V), which is located between said zener diodes (ZN1, ZN2).

## Revendications

1. Procédé pour la production d'une charge de base dans un circuit à courant alternatif dans lequel est disposé un appareil électronique de commande, une résistance de charge de base rendant possible un courant de charge minimum à travers l'appareil de commande pour son exploitation avec une sécurité de fonctionnement, caractérisé en ce qu'il est utilisé, comme charge de base, une charge de base active (AG) qui est commandée de façon que le courant de charge minimum acheminé par la résistance de charge de base (RGL) ne s'écoule que dans la phase de blocage de l'appareil de commande (ST) et en ce qu'en dehors de la phase de blocage dont le début et la fin sont saisis, la charge de base est de valeur ohmique élevée.

2. Procédé suivant la revendication 1, caractérisé en ce que, dans le cas d'un appareil de commande (ST) qui fonctionne avec découpage de phase, l'augmentation du courant de charge qui apparaît lors d'un commencement de la phase de passage de l'appareil de commande (ST) est saisie et est utilisée, après une évaluation correspondante, pour la coupure du courant de charge minimum acheminé par la résistance de charge de base (RGL).

3. Procédé suivant l'une des revendications précédentes, caractérisé en ce que, dans le cas d'un appareil de commande (ST) fonctionnant avec découpage de phase, le moment du passage par une tension nulle dans le circuit de courant alternatif est saisi et est utilisé, après une évaluation correspondante, pour la mise en circuit du courant de charge minimum.

4. Procédé suivant la revendication 1, caractérisé en ce que, dans le cas d'un appareil de commande (ST) fonctionnant avec découpage de phase, la chute du courant de charge apparaissant à la fin de la phase de passage de l'appareil de commande (ST) est saisie et est utilisée, après une évaluation correspondante, pour la mise en circuit du courant de charge minimum.

5. Procédé suivant la revendication 4, caractérisé en ce que, dans le cas d'un appareil de commande (ST) fonctionnant avec découpage de phase, le moment du passage par une tension nulle dans le circuit de courant alternatif est saisi et est utilisé, après une évaluation correspondante, pour la coupure du courant de charge minimum.

6. Agencement de commutation pour la mise en oeuvre du procédé suivant l'une des revendications 1 à 5, comportant un appareil de commande électronique (ST) qui est disposé dans un circuit à courant alternatif et qui est équipé d'une charge de base rendant possible un courant de charge minimum nécessaire pour l'exploitation avec une sécurité de fonctionnement de l'appareil de commande (ST), caractérisé en ce qu'il est utilisé, en tant que charge de base, une charge de base (AG) active qui saisit un début et une fin de la phase de blocage de l'appareil de commande (ST), qui comporte un premier élément de commutation (SG1) ainsi que des ensembles fonctionnels pour une saisie du courant (EF), pour une synchronisation (SY) et pour une première alimentation interne de tension (SV1) et qui commute dans le circuit de courant alternatif, pendant la phase de blocage de l'appareil de commande (ST), une résistance de charge de base (RGL) de faible valeur ohmique convenant pour le premier élément de commutation (SG1) et est d'une valeur ohmique élevée en dehors de la phase de blocage.

7. Agencement de commutation suivant la revendication 6, caractérisé en ce que la première alimentation interne de tension (SV1) est effectuée à l'aide d'une diode de réseau (DN) qui est appliquée au conducteur de phase (L) d'une source de tension alternative (LN) et qui, par l'intermédiaire d'une résistance de réseau (RN) et d'une diode Zener (Z) reliée au potentiel nul, produit à l'endroit de cette dernière une tension continue stabilisée et lissée par un condensateur de charge (C).

8. Agencement de commutation suivant l'une des revendications 6 et 7, caractérisé en ce que la synchronisation (SY) et la logique de commande (AL) pour la saisie des passages par la tension nulle de la source de tension alternative (LN) sont réalisées à l'aide de deux résistances de division de tension (RS1, RS2) qui sont situées entre le conducteur de phase (L) et le potentiel de référence (B) et dont la prise est reliée par un inverseur (ICI) aux entrées de deux monostables (IC2, IC3) dont les sorties sont reliées par l'intermédiaire de chaque fois une diode (D1, D2) et sont appliquées à l'entrée de commande (SE) du premier élément de commutation (SG1) par l'intermédiaire d'un second inverseur (IC4) et d'une résistance de couplage (RGO).

9. Agencement de commutation suivant l'une des revendications 6 à 8, caractérisé en ce que le premier élément de commutation (SG1) comporte deux transistors de commutation (TS1, TS2) agencés en série par leurs trajets de commutation, en ce qu'une diode inverse (DI1, DI2) est branchée en parallèle à chaque trajet de commutation et en ce que les deux transistors de commutation (TS1, TS2) sont polarisés et commandés de façon que, suivant la polarité de la demi-onde de tension alternative, un courant s'écoule soit par le trajet de commutation du premier transistor de commutation (TS1) et par la seconde diode inverse (DI2) soit par le trajet de commutation du second transistor de commutation (TS2) et par la première diode inverse (DI1) et en ce que respectivement le premier transistor de commutation (TS1), par l'intermédiaire d'une première résistance de mesure (RM1), et le second transistor de commutation (TS2), par l'intermédiaire d'une seconde résistance de mesure (RM2), sont appliqués avec le raccordement de source au potentiel de référence (B) et en ce que respectivement le premier transistor de commutation (TS1), avec le raccordement de drain par l'intermédiaire d'une première résistance chutrice (RV1), et l'appareil de commande (ST) sont appliqués au conducteur de phase (L) et le second transistor de commutation (TS2) est appliqué au conducteur neutre (N) par l'intermédiaire d'une seconde résistance chutrice (RV2) et en ce que les raccordements de porte des deux transistors de commutation (TS1, TS2) sont reliés chaque fois par une résistance de porte (RG1, RG2) à l'entrée de commande (SE) du premier élément de commutation (SG1).

10. Agencement de commutation suivant la revendication 9, caractérisé en ce que les raccordements de source des deux transistors de commutation (TS1, TS2) du premier élément de commutation (SG1) sont appliqués par chaque fois une résistance de base (RB1, RB2) à la base d'un transistor (Tl, T2) respectif dont les collecteurs sont reliés par un conducteur commun à des entrées de remise à l'état initial (R) des monostables (IC2, IC3) et dont l'émetteur est appliqué au potentiel de référence (B).

11. Agencement de commutation suivant l'une des revendications 6 à 10, caractérisé en ce qu'à la sortie du second inverseur (IC4) de la charge de base active (AG) il peut être prélevé un signal de découplage (AS) qui parvient par un couple (OPTO) à un convertisseur (KV) qui sert à la commande d'un appareil électronique (EVG) monté en amont et qui comporte des ensembles fonctionnels comprenant une production de signaux d'impulsions et de pauses (PP), une transformation (WA), un ordre de commutation (SB), une limitation de courant de mise en service (BG), un second élément de commutation (SG2) et une seconde alimentation interne de tension (SV2).

12. Agencement de commutation suivant la revendication 11, caractérisé en ce qu'il est utilisé, en tant que coupleur (OPTO) à l'entrée de la production d'impulsions et de pauses (PP), un optocoupleur dont le signal de sortie parvient, par l'intermédiaire d'un troisième inverseur (IC), sous une forme négative à la transformation (WA) et à l'ensemble fonctionnel pour l'ordre de commutation (SB).

13. Agencement de commutation suivant la revendication 12, caractérisé en ce que l'ensemble fonctionnel (WA) servant à la transformation comporte un amplification opérationnel (OP) monté sous la forme d'un intégrateur, avec des résistances (R01, R02, R03) et des condensateurs (CO1, CO2), et commandant un transistor (TO), le transistor (TO) servant de résistance commandée modifiable et pontant par son trajet collecteur/émetteur - l'entrée de commande d'un appareil électronique (EVG) monté en amont.

14. Agencement de commutation suivant la revendication 12, caractérisé en ce que le signal de sortie du troisième inverseur (IC) est fourni, pour la prolongation du signal, à un troisième monostable (MF) et parvient de celui-ci, par l'intermédiaire d'une résistance (RF), à la base d'un transistor (TF) dont l'émetteur est relié au potentiel de conducteur neutre (N) et dont le conducteur de collecteur est appliqué à un enroulement de relais (R) qui relie, par un contact de commutation (SR) du relais, un raccordement de commutation (SCE) de l'appareil électronique (EVG) monté en amont au conducteur de phase (L) de la source de tension alternative (LN).

15. Agencement de commutation suivant l'une des revendications 11 à 14, caractérisé en ce que la seconde alimentation interne de tension (SV2) est réalisée à l'aide d'un branchement en série qui est situé entre le conducteur de phase (L) et le conducteur neutre (N) d'une source de tension alternative (LN) et auquel appartiennent une seconde diode de réseau (DN1), une bobine (DR), un condensateur (XN) et une seconde résistance de réseau (RN1) et en ce que, à partir de la seconde diode de réseau (DN1) appliquée au potentiel de conducteur neutre, une troisième diode de réseau (DN2) conduit à une première sortie d'alimentation positive (+24V) lissée par des condensateurs (CN1, CN2) et conduit, par l'intermédiaire de diodes Zener (ZN1, ZN2) branchées en série et appliquées au potentiel de conducteur neutre, à une seconde sortie d'alimentation (+12V) stabilisée disposée entre ces dernières.
